# EUROPEAN PATENT APPLICATION

(11) **EP 4 761 422 A1**
(43) Date of publication of application: **17.06.2026**
(21) Application number: 24852404.3
(22) Date of filing: 09.08.2024
(51) Int. Cl.: H04W 72/1268, H04W 74/00, H04L 1/08, H04W 74/0833, H04W 72/231, H04B 17/318, H04W 24/08

(54) **METHOD AND APPARATUS FOR TRANSMITTING AND RECEIVING UPLINK SHARED CHANNEL**

(30) Priority: 10.08.2023 KR 20230104930
(71) Applicant: LG Electronics Inc., Yeongdeungpo-gu Seoul 07336 (KR)
(72) Inventor: SHIN, Seokmin, Seoul 06772 (KR); KO, Hyunsoo, Seoul 06772 (KR); BAN, Choongsang, Seoul 06772 (KR)
(74) Representative: Maikowski & Ninnemann Patentanwälte Partnerschaft mbB
(86) International application number: PCT/KR2024/011892
(87) International publication number: WO 2025/034051

(57) **Abstract**

A method according to an embodiment of the present disclosure comprises receiving a Physical Downlink Shared Channel (PDSCH), receiving Downlink Control Information (DCI) for scheduling a Physical Uplink Shared Channel (PUSCH), and transmitting the PUSCH. The PDSCH includes a contention resolution identity. The DCI is based on a DCI format 0_0 with a Cyclic Redundancy Check (CRC) scrambled by a cell (C)-radio network temporary identifier (RNTI). Based on a higher layer parameter, whether a repetition related to the PUSCH is enabled is determined.

## Description

### [TECHNICAL FIELD]

The present disclosure relates to a method and device for transmitting and receiving an uplink shared channel.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

MSG5 PUSCH refers to a PUSCH that a UE receiving MSG4 (contention resolution) in a RACH procedure transmits so as to send a RRC connection setup complete message. In other words, the MSG5 PUSCH may refer to a PUSCH transmitted before a dedicated PUSCH configuration. The PUSCH may be scheduled based on DCI format 0_0 with CRC scrambled by C-RNTI.

### [DISCLOSURE]

### [TECHNICAL PROBLEM]

In Rel-18, repetition for MSG1 (PRACH) and MSG3 (PUSCH) is supported. Furthermore, repetition is also supported for PUCCH for HARQ-ACK transmission for MSG4. Therefore, repetition should also be supported for MSG5 PUSCH to enhance coverage.

The present disclosure provides a method of supporting a repetition for a MSG5 PUSCH. More specifically, the present disclosure provides a method of supporting a repetition for a PUSCH scheduled by DCI format 0_0 with cyclic redundancy check (CRC) scrambled by C-RNTI.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) according to an embodiment of the present disclosure comprises receiving a Physical Downlink Shared Channel (PDSCH), receiving Downlink Control Information (DCI) for scheduling a Physical Uplink Shared Channel (PUSCH), and transmitting the PUSCH. The PDSCH includes a contention resolution identity.

The DCI is based on a DCI format 0_0 with a Cyclic Redundancy Check (CRC) scrambled by a cell (C)-radio network temporary identifier (RNTI).

Based on a higher layer parameter, whether a repetition related to the PUSCH is enabled is determined.

The higher layer parameter may indicate whether the repetition is enabled or disabled.

The higher layer parameter may indicate the number of repetitions.

The method may further comprise receiving a System Information Block (SIB) including the higher layer parameter.

Based on the repetition being enabled, the PUSCH may be transmitted based on time domain resources related to the number of repetitions.

Based on the higher layer parameter being not configured, the PUSCH may be transmitted once.

The method may further comprise transmitting capability information. The capability information may include first information representing whether the repetition is supported by the UE.

Based on the first information being included in the capability information, the capability information may further include second information. The second information may represent whether repetition of the PUSCH scheduled by a random access response (RAR) uplink (UL) grant is supported.

The method may further comprise transmitting information including a request for the repetition.

The information including the request may be transmitted based on i) whether the repetition is supported by the UE and/or ii) a condition related to the repetition.

The condition may be satisfied based on a Reference Signal Received Power (RSRP) being less than a RSRP threshold.

Based on i) the repetition being supported by the UE and ii) the condition being satisfied: the information including the request may be transmitted.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions.

The instructions executable by one or more processors are configured to allow the one or more processors to perform all steps of any one of the methods.

A method performed by a base station according to another embodiment of the present disclosure comprises transmitting a Physical Downlink Shared Channel (PDSCH), transmitting Downlink Control Information (DCI) for scheduling a Physical Uplink Shared Channel (PUSCH), and receiving the PUSCH. The PDSCH includes a contention resolution identity.

The DCI is based on a DCI format 0_0 with a Cyclic Redundancy Check (CRC) scrambled by a cell (C)-radio network temporary identifier (RNTI).

Based on a higher layer parameter, whether a repetition related to the PUSCH is enabled is determined.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

### [ADVANTAGEOUS EFFECTS]

According to embodiments of the present disclosure, since PUSCH repetition for MSG5 is supported, a RACH procedure can be successfully completed even under poor channel conditions (e.g., when MSG1 and MSG3 are repeatedly transmitted).

Further, the delay before UE-specific RRC configuration for UL/DL is established after the RACH procedure can be minimized.

In addition, since enable/disable of PUSCH repetition for MSG5 is indicated by a higher layer parameter, ambiguity in UE operation related to the RACH procedure can be resolved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG. 1 illustrates physical channels and general signal transmission used in a 3GPP system.
FIG. 2 illustrates a procedure of acquiring system information (SI).
FIG. 3 illustrates a random access procedure.
FIG. 4 illustrates an example of an uplink transmission and reception operation.
FIG. 5 is a flowchart illustrating a method performed by a user equipment according to an embodiment of the present disclosure.
FIG. 6 is a flowchart illustrating a method performed by a base station according to another embodiment of the present disclosure.
FIG. 7 illustrates configuration of a first device and a second device according to an embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### Physical Channel and General Signal Transmission

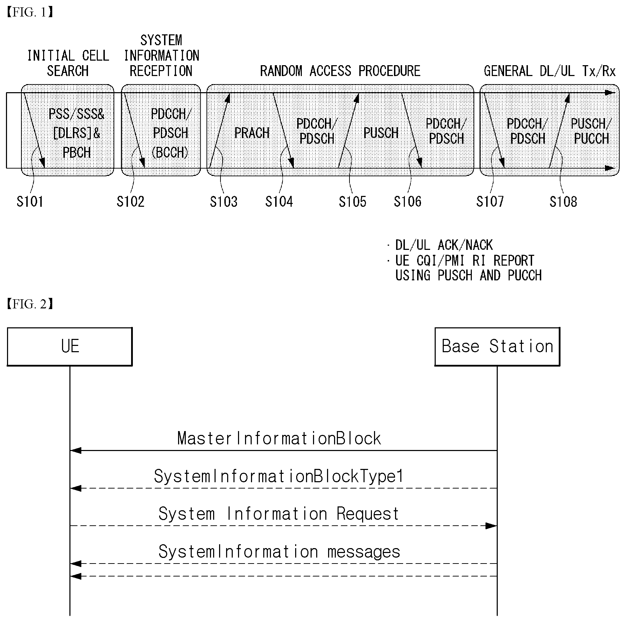

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

When there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the procedure may then perform PDCCH/PDSCH reception (S107) and Physical Uplink Shared Channel (PUSCH)/Physical Uplink Control Channel (PUCCH) transmission (S108) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

FIG. 2 illustrates a procedure of acquiring system information (SI).

A UE may acquire AS-/NAS-information through an SI acquisition procedure. The SI acquisition procedure may be applied to a UE of RRC_IDLE state, RRC_INACTIVE state, and RRC_CONNECTED state.

SI is divided into a master information block (MIB) and a plurality of system information blocks (SIBs). SI other than the MIB may be referred to as remaining minimum system information (RMSI). This will be described in detail below.
- MIB includes information/parameters related to SIB1 (SystemInformationBlockType1) reception and is transmitted on PBCH of SSB. In the initial cell selection, the UE assumes that a half frame with the SSB is repeated with a periodicity of 20 ms. The UE may check whether a control resource set (CORESET) for a Type0-PDCCH common search space exists based on the MIB. The Type0-PDCCH common search space is a kind of PDCCH search space and is used to transmit a PDCCH for scheduling an SI message. If the Type0-PDCCH common search space exists, the UE may determine, based on information (e.g., pdcch-ConfigSIB1)) within the MIB, (i) a plurality of consecutive RBs and one or more consecutive symbols constituting the CORESET and (ii) a PDCCH occasion (i.e., a time domain location for PDCCH reception). If there is no Type0-PDCCH common search space, pdcch-ConfigSIB1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may indicate whether the SIBx is periodically broadcasted or whether the SIBx is provided by a request of the UE by an on-demand scheme. If the SIBx is provided by the on-demand scheme, the SIB1 may include information that the UE requires to perform an SI request. The SIB1 is transmitted on the PDSCH, the PDCCH scheduling the SIB1 is transmitted through the Type0-PDCCH common search space, and the SIB1 is transmitted on the PDSCH indicated by the PDCCH.
- The SIBx is included in the SI message and is transmitted on the PDSCH. Each SI message is sent within a time window (i.e., SI-window) which periodically occurs.

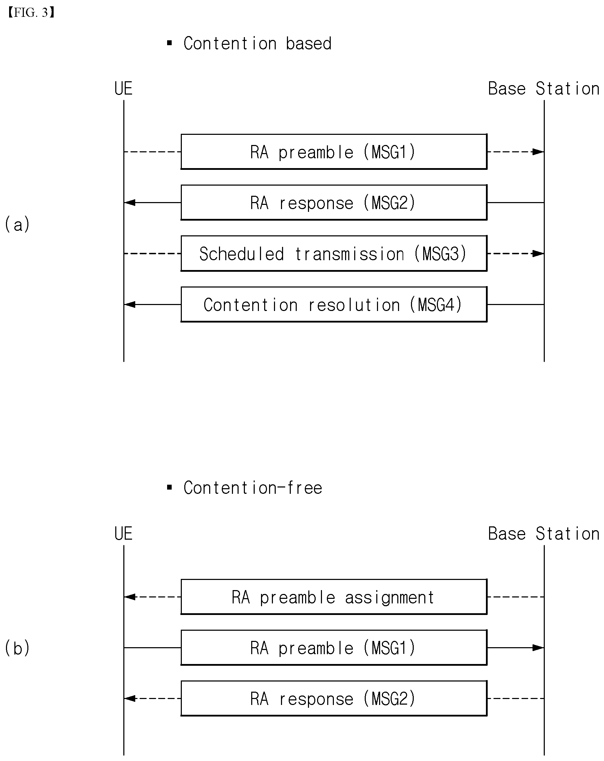

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.
- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

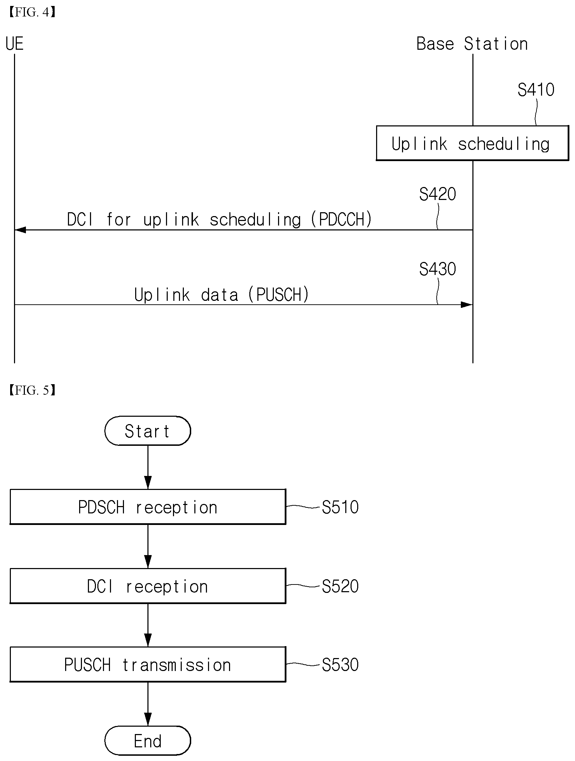

FIG. 4 illustrates an example of an uplink transmission and reception operation.

Referring to the FIG. 4, the eNB may schedule uplink transmission such as the frequency/time resource, the transport layer, an uplink precoder, the MCS, etc., (S410). In particular, the eNB may determine a beam for PUSCH transmission of the UE through the beam management operations described above. And, the UE may receive, from the eNB, DCI for uplink scheduling (i.e., including scheduling information of the PUSCH) on the PDCCH (S420). DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S430). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

PUSCH repetition is described in detail below.

pusch-TimeDomainAllocationList is set based on a higher layer parameter PUSCH-config. Parameters within pusch-TimeDomainAllocationList are as follows.

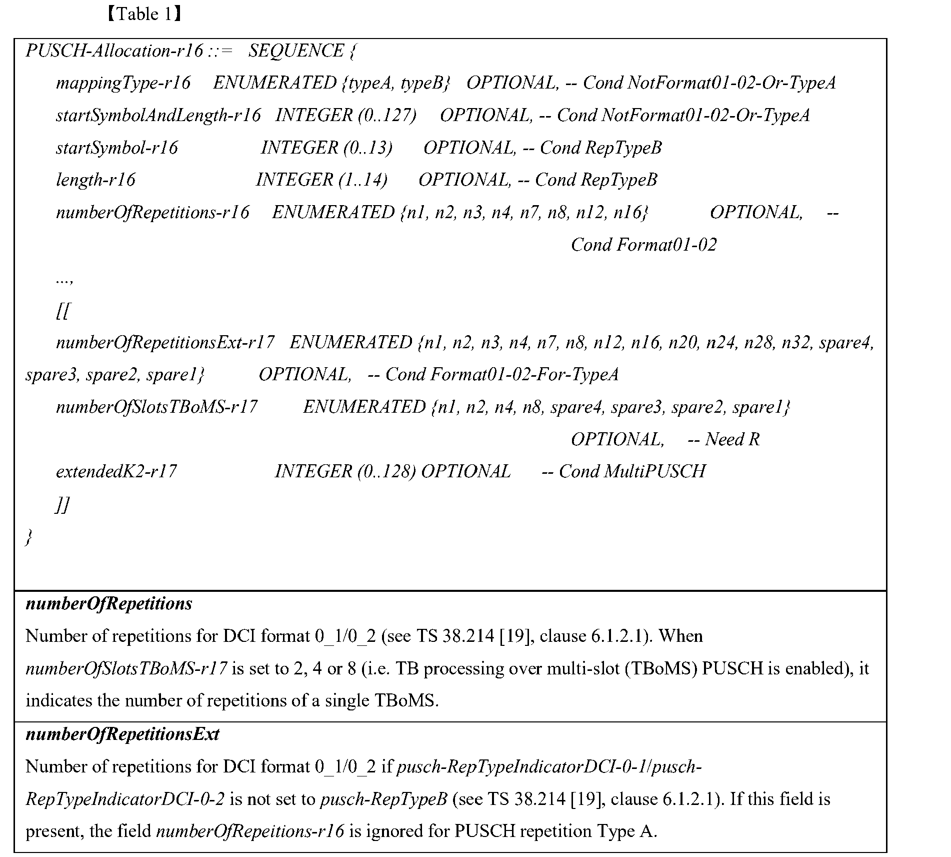

Referring to Table 1, parameters numberOfRepetitions and numberOfRepetitionsExt within pusch-TimeDomainAllocationList are related to a dynamic indication.

A semi-static indication related to PUSCH repetition may be performed. Specifically, referring to Table 2 below, a parameter pusch-AggregationFactor may be set based on a higher layer parameter PUSCH-config.

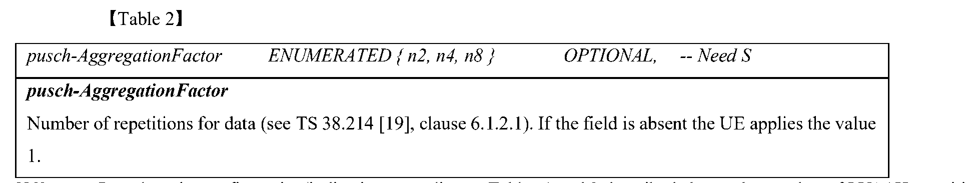

Based on the configuration/indication according to Tables 1 and 2 described above, the number of PUSCH repetitions may be determined based on Table 3 below.

**[Table 3]**

| | |
|---|---|
| For PUSCH repetition Type A, when transmitting PUSCH scheduled by DCI format 0_1 or 0_2 in PDCCH with CRC scrambled with C-RNTI, MCS-C-RNTI, or CS-RNTI with NDI=1, the number of repetitions *K* is determined as | |
| | - if *numberOfRepetitions* is present in the resource allocation table, the number of repetitions K is equal to *numberOfRepetitions*; |
| | - elseif the UE is configured with *pusch-AggregationFactor*, the number of repetitions *K* is equal to *pusch-AggregationFactor;* |
| | - otherwise *K*=*1*. |
| - the number of slots used for TBS determination *N* is equal to 1. | |

The contents discussed above can be applied in combination with methods proposed in the present disclosure, which will be described later, or can be supplemented to clarify the technical features of methods proposed in the present disclosure.

In addition, methods related to PUSCH transmission to be described later are related to uplink transmission and can be equally applied to the uplink signal transmission method in the NR system (licensed band) or the U-Band system (unlicensed band) described above. It is obvious that the technical idea proposed in the present disclosure can be modified or replaced to fit the terms, expressions, structures, etc. defined in each system so that it can be implemented in the relevant system as well.

For example, uplink transmission through the methods related to the PUSCH transmission to be described later can be performed in an L-cell (a cell operating in a licensed band (L-band)) and/or a U-cell (a cell operating in an unlicensed band (U-band)) defined in the NR system or the U-Band system. In addition, the uplink transmission through the methods related to the PUSCH transmission to be described later can be performed in a Terrestrial Networks (TN) system, and additionally, can be performed in a Non-Terrestrial Networks (NTN) system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

**[Table 4]**

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

UL signal/channel related to the RACH procedure may include Msg1 PRACH, Msg3 PUSCH, Msg4 HARQ-ACK PUCCH, Msg5 PUSCH, or the like. Repetition transmission for Msg1 PRACH, Msg3 PUSCH, Msg4 HARQ-ACK PUCCH, etc. has been introduced or will be introduced through Rel-17 coverage enhancement and/or Rel-18 coverage enhancement.

In addition, a UE, that enters a RRC connected state, receives PUSCH-config from a base station via dedicated RRC signaling. For a PUSCH that the UE receiving the PUSCH-config can transmit, the base station may configure to perform a repetition transmission through a semi-static method and/or a dynamic method.

On the other hand, since Msg5 PUSCH is transmitted before the UE receives the PUSCH-config, repetition transmission for Msg5 PUSCH is not currently supported. The repetition transmission for Msg5 PUSCH may be considered in Rel-19 or after Rel-19.

Operations of the UE/base station to support a repetition transmission for Msg5 PUSCH are described below. Specifically, 1) a method of enabling/disabling a repetition transmission for Msg5 PUSCH and 2) a method of setting an RSRP threshold for a repetition transmission for Msg5 PUSCH are sequentially described.

The Msg5 PUSCH mentioned in the present disclosure may be defined as follows.

After a UE receives a Msg4 PDSCH and completes HARQ-ACK PUCCH transmission for the Msg4 PDSCH, the UE may transmit a Msg5 PUSCH. Specifically, the Msg5 PUSCH may refer to a PUSCH that is dynamically configured/indicated/scheduled based on DCI format 0_0 scrambled with C-RNTI, etc., before the UE receives dedicated RRC signaling including PUSCH-config.

Enable/disable methods for Msg5 PUSCH repeated transmission

### [Method 1]

A method of using an explicit indication based on a higher layer parameter may be considered.

Specifically, it may be considered to transmit an explicit parameter indicating whether to enable/disable Msg5 PUSCH repetition transmission to a UE based on higher layer signaling (e.g., SIB, etc.).

More specifically, a new parameter indicating whether to enable/disable the Msg5 PUSCH repetition transmission may be introduced in the higher layer signaling (e.g., SIB, etc.). Whether to enable/disable the Msg5 PUSCH repetition transmission performed by the UE may be determined based on a value indicated by the parameter.

If the parameter is set to 'enable', the UE may be configured to repeatedly transmit the configured/indicated Msg5 PUSCH. If the parameter is set to 'disable', the UE may be configured to transmit the configured/indicated Msg5 PUSCH only once in the existing manner.

For example, the following default operation may be defined/configured for cases where the parameter is not provided/configured. If the parameter is not provided based on the higher layer signaling (e.g., SIB, etc.), the UE and/or the base station may assume that the Msg5 PUSCH transmission is always performed as a single transmission and operate based on this. That is, when the method is applied, the parameter may be configured as follows. Only when the base station determines that the Msg5 PUSCH repetition transmission is necessary, the base station may set the parameter to 'enable' and indicate it to the UE. In this case, the parameter may also be configured without including any value.

For example, if the parameter is not provided/configured, the UE and/or the base station may assume that the Msg5 PUSCH transmission is always performed as a repetition transmission and operate based on this. That is, when the method is applied, the parameter may be configured as follows. Only when the base station determines that the Msg5 PUSCH repetition transmission is not necessary, the base station may set the parameter to 'disable' and indicate it to the UE. In this case, the parameter may also be configured without including any value.

For example, a parameter representing whether to enable/disable the above-described Msg5 PUSCH repetition transmission may be cell-specifically configured/indicated. That is, the parameter may be configured per cell.

For example, a parameter representing whether to enable/disable the Msg5 PUSCH repetition transmission may be BWP-specifically configured/indicated. That is, the parameter may be configured per BWP.

The above-described examples have assumed that the parameter is configured/indicated based on the higher layer signaling (SIB). The parameter may be configured based on a message related to a RACH procedure.

For example, a parameter may be additionally introduced to an RRC connection resolution message transmitted based on Msg4 PDSCH. Whether to enable/disable the Msg5 PUSCH repetition transmission may be indicated based on the additionally introduced parameter as described above. For example, whether to enable/disable the Msg5 PUSCH repetition transmission may be indicated together with the RRC connection resolution message transmitted on the Msg4 PDSCH. In other words, whether to enable/disable the Msg5 PUSCH repetition transmission may be indicated based on information other than parameters in the RRC connection resolution message.

If the UE successfully receives the Msg4 PDSCH, then the UE may decide/determine whether the Msg5 PUSCH repetition transmission has been allowed. Based on this, the UE may perform the Msg5 PUSCH repetition transmission. In this instance, the default operation described above may also be applied to the present method. Specifically, if a parameter transmitting whether to enable/disable is not provided or enable/disable information is not provided, the default operation described above may be configured/defined to be applied.

### [Method 2]

A method of using an implicit determination based on repetition of other uplink channels may be considered.

Specifically, whether to enable/disable a repetition transmission for Msg5 PUSCH may be determined based on the following 1) and 2).
1) If a base station provides parameters related to the Msg5 PUSCH repetition transmission to a UE via higher layer signaling (e.g., SIB, etc.), and
2) if the UE requests repetition transmission of Msg3 PUSCH (and/or Msg1 PRACH preamble and/or Msg4 HARQ-ACK PUCCH), or if a specific condition is satisfied and the UE determines that repetition transmission for the above signals/channels is required (e.g., the UE determines that repetition transmission is required when an RSRP value acquired by the UE is lower than an RSRP threshold indicated by the base station),

The UE may implicitly decide/determine that the repetition transmission for Msg5 PUSCH is also necessary. Based on this, the UE may perform the repetition transmission for Msg5 PUSCH.

To apply the above method, a UE capability for the Msg5 PUSCH repetition transmission may be defined to be configured in association with a UE capability for repetition transmission of other UL channels.

Specifically, it may be assumed that the Msg5 PUSCH repetition transmission is defined in association with the Msg3 PUSCH repetition transmission. If whether to enable/disable the Msg5 PUSCH repetition transmission is determined based on whether to enable/disable the Msg3 PUSCH repetition transmission, the UE capability may be defined/configured as follows.

The UE supporting the Msg5 PUSCH repetition transmission needs to always support the Msg3 PUSCH repetition transmission. That is, when the UE reports the capability for the Msg5 PUSCH repetition transmission, the UE may be configured/defined to also report the capability for the Msg3 PUSCH repetition transmission together.

For example, the UE supporting the Msg5 PUSCH repetition transmission may be configured/defined to include, in capability information, information indicating that the Msg3 PUSCH repetition transmission is supported in addition to information indicating that the Msg5 PUSCH repetition transmission is supported. For example, based on the information indicating that the Msg5 PUSCH repetition transmission is supported being included in the capability information, the information indicating that the Msg3 PUSCH repetition transmission is supported may be included in the capability information,

For example, the UE capability for the Msg5 PUSCH repetition transmission may include the UE capability for the Msg3 PUSCH repetition transmission. If the base station receives the UE capability for the Msg5 PUSCH repetition transmission from the UE, the base station may be configured to understand that the UE is capable of the Msg3 PUSCH repetition transmission as well as the Msg5 PUSCH repetition transmission.

The UL signal/channel that can be associated with the Msg5 PUSCH repetition transmission is not limited to the above-described Msg3 PUSCH. For example, instead of the Msg3 PUSCH, Msg1 PRACH preamble and/or Msg4 HARQ-ACK PUCCH may be associated with the Msg5 PUSCH repetition transmission. That is, in the example described above, the 'Msg3 PUSCH' may be interpreted/replaced with the 'Msg1 PRACH preamble' and/or the 'Msg4 HARQ-ACK PUCCH'.

### [Method 3]

A method of using an implicit determination based on repetition factor signaling via higher layer signaling may be considered.

Specifically, a base station may configure/indicate, to a UE, one or multiple repetition factors for Msg5 PUSCH repetition transmission via higher layer signaling (e.g., SIB, etc.).

Based on a repetition factor parameter being configured/indicated, the UE may be configured to operate assuming that the Msg5 PUSCH repetition transmission has been enabled from the base station.

For example, if the one repetition factor is indicated, one of positive integer values (excluding 1) may be indicated (e.g., powers of 2, i.e., 2, 4, 8, etc.).

For example, if the multiple repetition factors are indicated, two or more repetition factors may be combined and configured/indicated among positive integers including 1. Specifically, it may be assumed that the repetition factors to be indicated by the base station are 1, 2, 4, and 8. In this case, combinations capable of including two or more repetition factors may include {1, 2}, {1, 4}, {1, 8}, {2, 4}, {2, 8}, {4, 8}, {1, 2, 4}, {1, 2, 8}, {1, 4, 8}, {2, 4, 8}, {1, 2, 4, 8}, etc.

As a result, if the base station indicates the repetition factor parameter for the Msg5 PUSCH repetition transmission to the UE, the UE may consider that the Msg5 PUSCH has been enabled in the corresponding cell. If the UE has the capability for the Msg5 PUSCH repetition transmission and/or satisfies a specific condition that requires the Msg5 PUSCH repetition transmission to be requested, the UE may be configured to report the capability to the base station or request the repetition transmission. Based on the capability or request content reported by the UE, the base station may schedule the Msg5 PUSCH as a single transmission or a repetition transmission. Specifically, the base station may determine whether to allocate the Msg5 PUSCH as the single transmission or as multiple transmissions, and the base station may be configured to schedule the Msg5 PUSCH based on the determination. The UE may perform Msg5 PUSCH transmission as the single transmission or the repetition transmission based on the scheduling information.

RSRP Threshold for Msg5 PUSCH repeated transmission

In order for the UE to determine (by itself) whether to enable the repetition transmission of Msg5 PUSCH, the base station may configure/indicate a RSRP threshold. In this instance, one of the following options may be defined to be used.

### Option 1)

A RSRP threshold that has been previously provided for determining repetition transmissions of other signals/channels, may be reused for determining Msg5 PUSCH repetition transmission.

For example, the RSRP threshold provided/configured for determining repetition transmission of Msg1 PRACH preamble may be defined to be reused for determining the Msg5 PUSCH repetition transmission.

For example, the RSRP threshold provided/configured for determining repetition transmission of Msg3 PUSCH may be defined to be reused for determining the Msg5 PUSCH repetition transmission.

For example, the RSRP threshold provided/configured for determining repetition transmission of Msg4 HARQ-ACK PUCCH may be defined to be reused for determining the Msg5 PUSCH repetition transmission.

According to the present embodiment, the following effects are achieved. If the existing RSRP threshold is reused, there is no need to introduce or configure/provide additional parameters for the Msg5 PUSCH. Hence, implementation complexity/signaling overhead required to support determining whether to enable repetition transmission of the Msg5 PUSCH can be minimized.

### Option 2)

A base station may configure/provide a new RSRP threshold to a UE so as to determine Msg5 PUSCH repetition transmission, separately from the existing used RSRP threshold.

According to the present embodiment, the base station may independently manage whether to enable the Msg5 PUSCH repetition transmission for UEs that are capable of the Msg5 PUSCH repetition transmission within the corresponding cell, separately from the repeat transmissions of other signals/channels. Therefore, there is an advantage of increased freedom in network operation.

After defining/indicating the RSRP threshold for determining the Msg5 PUSCH repetition transmission, the following operations may be performed.

For example, if a currently measured RSRP value by the UE (using a specific reference signal) is lower than the RSRP threshold provided (or indicated to be reused) by the base station, the UE may determine that repetition transmission of the Msg5 PUSCH is necessary. The UE may be configured to notify the base station that the repetition transmission of the Msg5 PUSCH is required.

For example, if a currently measured RSRP value by the UE (using a specific reference signal) is higher than the RSRP threshold provided (or indicated to be reused) by the base station, the UE may determine that repetition transmission of the Msg5 PUSCH is not necessary. The UE may be configured to notify the base station that only a single transmission is necessary for the Msg5 PUSCH.

In addition, the proposed methods can be configured/applied to other UL signals/channels, such as PUSCH/PUCCH/PRACH. It is obvious that examples of the proposed methods described above can also be included as one of the implementation methods of the present disclosure, and thus can be considered as a type of proposed method. The proposed methods described above can be implemented independently, but can also be implemented in the form of a combination (or merge) of some of the proposed methods. Information on whether to apply the methods (or information on the rules of the methods) may be defined as a rule so that the base station notifies the UE via a predefined signal (e.g., a physical layer signal or a higher layer signal). For example, the higher layer may include, one or more of functional layers, such as MAC, RLC, PDCP, RRC, and SDAP.

The methods, embodiments or descriptions for implementing the method proposed in the present disclosure may be applied separately, or one or more methods (or embodiments or descriptions) may be applied in combination.

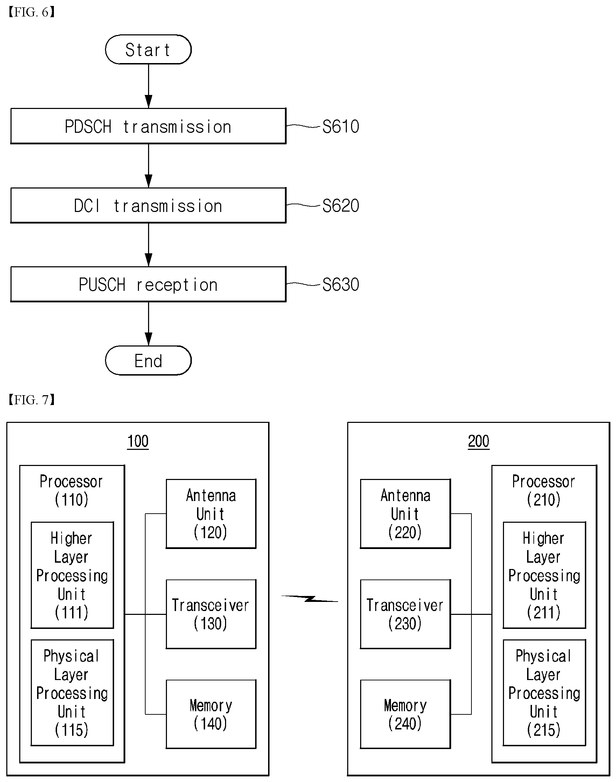

From an implementation perspective, operations of the UE/base station according to the above-described embodiments (e.g., operations related to PUSCH repetition transmission based on at least one of the methods 1 to 3, the option 1 and/or option 2) can be processed by a device (e.g., processors 110 and 210 of FIG. 7) of FIG. 7 described below.

Further, the operations of the UE/base station according to the above-described embodiments (e.g., operations related to PUSCH repetition transmission based on at least one of the methods 1 to 3, the option 1 and/or option 2) can be stored in a memory (e.g., memories 140 and 240 of FIG. 7) in the form of commands/programs (e.g., instructions, executable codes) for running at least one processor (e.g., processors 110 and 210 of FIG. 7).

Below, the above-described embodiments are described in detail from a UE/base station operation perspective with reference to FIGS. 5 and 6. Methods described below are merely distinguished for convenience of explanation. Thus, it is obvious that partial configuration of any method can be substituted or combined with partial configuration of another method.

FIG. 5 is a flowchart illustrating a method performed by a user equipment according to an embodiment of the present disclosure.

Referring to FIG. 5, a method performed by a user equipment (UE) according to an embodiment of the present disclosure comprises a PDSCH reception step S510, a DCI reception step S520, and a PUSCH transmission step S530.

In the step S510, the UE receives a Physical Downlink Shared Channel (PDSCH) from a base station. The PDSCH may include a contention resolution identity. For example, the PDSCH may be related to a message Msg4 for contention resolution in a random access procedure.

In the step S520, the UE receives Downlink Control Information (DCI) for scheduling a Physical Uplink Shared Channel (PUSCH) from the base station.

In the step S530, the UE transmits the PUSCH to the base station.

For example, the DCI may be based on a DCI format 0_0 with a Cyclic Redundancy Check (CRC) scrambled by a cell (C)-radio network temporary identifier (RNTI). The PUSCH may refer to a PUSCH (e.g., Msg5 PUSCH) related to a RRC setup complete message.

Whether a repetition related to the PUSCH is enabled may be configured/indicated/determined based on at least one of the above-described methods 1 to 3.

According to an embodiment, whether the repetition related to the PUSCH is enabled may be determined based on a higher layer parameter.

For example, the higher layer parameter may indicate whether the repetition is enabled or disabled. The present embodiment may be based on the method 1.

For example, the higher layer parameter may indicate the number of repetitions. That is, based on the higher layer parameter being configured, it may be determined that the repetition is enabled. The present embodiment may be based on the method 3.

For example, based on the repetition being enabled, the PUSCH may be transmitted based on time domain resources related to the number of repetitions.

For example, based on the higher layer parameter being not configured, the PUSCH may be transmitted once. The present embodiment may be based on the default operation described above.

According to an embodiment, the method may further include a SIB reception step. Specifically, the UE may receive a system information block (SIB) including the higher layer parameter from the base station. The present embodiment may be based on the method 1 and/or the method 3. The SIB reception step may be performed before the step S510. For example, the SIB reception step may be performed based on FIG. 2.

According to an embodiment, the method may further include a capability information transmission step. Specifically, the UE may transmit capability information to the base station. The present embodiment may be based on at least one of the methods 1 to 3. For example, the transmission of the capability information may mean reporting of a capability by the UE in the method 3. The capability information transmission step may be performed before the step S510. For example, the capability information transmission step may be performed after the SIB reception step.

For example, the capability information may include first information representing whether the repetition is supported by the UE.

The embodiments of the proposals 1 to 3 may be combined and applied to the UE/base station operations as long as they do not conflict with each other. For example, whether the repetition is enabled may be determined/indicated based on the method 1 or the method 3, and the UE capability related to the repetition may be defined/configured based on the method 2. For example, based on the first information being included in the capability information, the capability information may further include second information. The second information may represent whether repetition of the PUSCH (e.g., Msg3 PUSCH) scheduled by a random access response (RAR) uplink (UL) grant is supported.

According to an embodiment, the method may further include a request transmission step. Specifically, the UE may transmit information including a request for the repetition to the base station. The present embodiment may be based on the method 3. The request transmission step may be performed before the step S510 or the step S520. For example, the request transmission step may be performed after the SIB reception step.

For example, the information including the request may be transmitted based on i) whether the repetition is supported by the UE and/or ii) a condition related to the repetition.

For example, the condition may be satisfied based on a Reference Signal Received Power (RSRP) being less than a RSRP threshold. The RSRP threshold may be based on the Option 1) or the Option 2).

For example, based on i) the repetition being supported by the UE and ii) the condition being satisfied, the information including the request may be transmitted. According to another embodiment, based on i) the repetition being supported by the UE and ii) the condition being satisfied, the capability information may be transmitted.

The operations based on the steps S510 to S530, the SIB reception step, the capability information transmission step, and the request transmission step may be implemented by a device of FIG. 7. For example, a UE 200 may control one or more transceivers 230 and/or one or more memories 240 so as to perform the operations based on the steps S510 to S530, the SIB reception step, the capability information transmission step, and the request transmission step.

Below, the above-described embodiments are described in detail from a perspective of base station operation.

Steps S610 to S630, a SIB transmission step, a capability information reception step, and a request reception step described below correspond to the steps S510 to S530, the SIB reception step, the capability information transmission step, and the request transmission step described with reference to FIG. 5. Considering the above correspondence, redundant description is omitted. That is, the detailed description of the base station operation described below can be replaced with the description/embodiment of FIG. 5 corresponding to the base station operation.

FIG. 6 is a flowchart illustrating a method performed by a base station according to another embodiment of the present disclosure.

Referring to FIG. 6, a method performed by a base station according to another embodiment of the present disclosure comprises a PDSCH transmission step S610, a DCI transmission step S620, and a PUSCH reception step S630.

In the step S610, the base station transmits a Physical Downlink Shared Channel (PDSCH) to a UE. The PDSCH may include a contention resolution identity. For example, the PDSCH may be related to a message Msg4 for contention resolution in a random access procedure.

In the step S620, the base station transmits Downlink Control Information (DCI) for scheduling a Physical Uplink Shared Channel (PUSCH) to the UE.

In the step S630, the base station receives the PUSCH from the UE.

For example, the DCI may be based on a DCI format 0_0 with a Cyclic Redundancy Check (CRC) scrambled by a cell (C)-radio network temporary identifier (RNTI). The PUSCH may refer to a PUSCH (e.g., Msg5 PUSCH) related to a RRC setup complete message.

Whether a repetition related to the PUSCH is enabled may be configured/indicated/determined based on at least one of the above-described methods 1 to 3.

According to an embodiment, whether the repetition related to the PUSCH is enabled may be determined based on a higher layer parameter.

According to an embodiment, the method may further include a SIB transmission step. Specifically, the base station may transmit a system information block (SIB) including the higher layer parameter to the UE. The present embodiment may be based on the method 1 and/or the method 3. The SIB transmission step may be performed before the step S610.

According to an embodiment, the method may further include a capability information reception step. Specifically, the base station may receive capability information from the UE. The present embodiment may be based on at least one of the methods 1 to 3. For example, the transmission of the capability information by the UE may mean reporting of a capability by the UE in the method 3. For example, the capability information reception step may be performed before the step S610. For example, the capability information reception step may be performed after the SIB transmission step.

According to an embodiment, the method may further include a request reception step. Specifically, the base station may receive information including a request for the repetition from the UE. The request reception step may be performed before the step S610 or the step S620. For example, the request reception step may be performed after the SIB transmission step.

The operations based on the steps S610 to S630, the SIB transmission step, the capability information reception step, and the request reception step described above may be implemented by a device of FIG. 7. For example, a base station 100 may control one or more transceivers 130 and/or one or more memories 140 so as to perform the operations based on the steps S610 to S630, the SIB transmission step, the capability information reception step, and the request reception step.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system).

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) comprising:
receiving a Physical Downlink Shared Channel (PDSCH), wherein the PDSCH includes a contention resolution identity;
receiving Downlink Control Information (DCI) for scheduling a Physical Uplink Shared Channel (PUSCH); and
transmitting the PUSCH,
wherein the DCI is based on a DCI format 0_0 with a Cyclic Redundancy Check (CRC) scrambled by a cell (C)-radio network temporary identifier (RNTI),
wherein, based on a higher layer parameter, whether a repetition related to the PUSCH is enabled is determined.

2. The method of claim 1, wherein the higher layer parameter indicates whether the repetition is enabled or disabled.

3. The method of claim 1, wherein the higher layer parameter indicates the number of repetitions.

4. The method of claim 1, further comprising receiving a System Information Block (SIB) including the higher layer parameter.

5. The method of claim 1, wherein, based on the repetition being enabled, the PUSCH is transmitted based on time domain resources related to the number of repetitions.

6. The method of claim 1, wherein, based on the higher layer parameter being not configured, the PUSCH is transmitted once.

7. The method of claim 1, further comprising transmitting capability information,
wherein the capability information includes first information representing whether the repetition is supported by the UE.

8. The method of claim 7, wherein, based on the first information being included in the capability information, the capability information further includes second information,
wherein the second information represents whether a repetition of the PUSCH scheduled by a random access response (RAR) uplink (UL) grant is supported.

9. The method of claim 1, further comprising transmitting information including a request for the repetition,
wherein the information including the request is transmitted based on i) whether the repetition is supported by the UE and/or ii) a condition related to the repetition.

10. The method of claim 9, wherein the condition is satisfied based on a Reference Signal Received Power (RSRP) being less than a RSRP threshold.

11. The method of claim 10, wherein based on i) the repetition being supported by the UE and ii) the condition being satisfied: the information including the request is transmitted.

12. A user equipment (UE) comprising:
one or more transceivers;
one or more processors; and
one or more memories connected to the one or more processors and storing instructions,
wherein the instructions, based on being executed by the one or more processors, configure the one or more processors to perform all steps of a method according to any one of claims 1 to 11.

13. A device comprising:
one or more memories; and
one or more processors operably connected to the one or more memories,
wherein the one or more memories store instructions that, based on being executed by the one or more processors, configure the one or more processors to perform all steps of a method according to any one of claims 1 to 11.

14. One or more non-transitory computer readable mediums storing instructions,
wherein the instructions executable by one or more processors configure the one or more processors to perform all steps of a method according to any one of claims 1 to 11.

15. A method performed by a base station comprising:
transmitting a Physical Downlink Shared Channel (PDSCH), wherein the PDSCH includes a contention resolution identity;
transmitting Downlink Control Information (DCI) for scheduling a Physical Uplink Shared Channel (PUSCH); and
receiving the PUSCH,
wherein the DCI is based on a DCI format 0_0 with a Cyclic Redundancy Check (CRC) scrambled by a cell (C)-radio network temporary identifier (RNTI),
wherein, based on a higher layer parameter, whether a repetition related to the PUSCH is enabled is determined.

16. A base station comprising:
one or more transceivers;
one or more processors; and
one or more memories connected to the one or more processors and storing instructions,
wherein the instructions, based on being executed by the one or more processors, configure the one or more processors to perform all steps of a method according to claim 15.
